Europäisches Patentamt

European Patent Office

Office européen des brevets

(11) Publication number: **0 041 391**
**B1**

# (12) EUROPEAN PATENT SPECIFICATION

(45) Date of publication of patent specification: **02.10.85**

(21) Application number: **81302415.5**

(22) Date of filing: **01.06.81**

(51) Int. Cl.⁴: **G 01 N 21/87**

(54) Method and system for examining a gem stone.

(30) Priority: **04.06.80 GB 8018349**
**06.04.81 GB 8110751**

(43) Date of publication of application:
**09.12.81 Bulletin 81/49**

(45) Publication of the grant of the patent:
**02.10.85 Bulletin 85/40**

(84) Designated Contracting States:
**BE CH DE FR LI NL SE**

(56) References cited:
**EP-A-0 007 809**
**GB-A-1 416 568**
**US-A-3 858 979**
**US-A-3 867 032**

**SYSTEMS, COMPUTERS, CONTROLS, vol. 8,
no. 3, May-June 1977 Ed. Scripta Washington,
DC, US H. KIKUCHI et al.: "Measurement of
parameters of polyhedra on a turntable by a TV
camera", pages 18-26**

(73) Proprietor: **GERSAN ESTABLISHMENT**
**Staedtle 36**
**FL-9490, Vaduz (LI)**

(72) Inventor: **Lawrence, John Charles**
**50, Heathfield Road**
**Acton London (GB)**
Inventor: **Stewart, Andrew David Garry**
**The Old Rectory Ashampstead**
**Reading Berkshire (GB)**
Inventor: **Dodson, John Sidney**
**20, Leigh Road**
**Cobham Surrey (GB)**
Inventor: **Doerman, Eryk Stefan**
**45 Cromwell Road,**
**London SW7 (GB)**

(74) Representative: **Lyndon-Stanford, Edward
Willoughby Brooke et al
Marks & Clerk 57/60 Lincoln's Inn Fields
London WC2A 3LS (GB)**

Courier Press, Leamington Spa, England.

(56) References cited:
FEINWERKTECHNIK und MESSTECHNIK vol. 87, no. 2, March 1979 München, DE H. WOLF: "Optisches Abtastsystem zur Identifizierung und Lageerkennung dreidimensionaler Objekte", pages 86-88

FEINWERKTECHNIK und MESSTECHNIK vol. 87, no. 5, July 1979, München, DE E. BARKE: "Nichtberührendes Messystem zur räumlichen Vermessung von Werkstücken", pages 216-220

## Description

### Background of the Invention

The present invention relates to a method of automatically determining the shape of a gem stone, wherein images of the stone are sensed at a number of different relative angular positions of the stone about an axis passing through the stone. The invention also relates to a system for automatically determining the shape of a gem stone, comprising means for providing respective images of the stone at a number of different relative angular positions of the stone about an axis passing through the stone, means for sensing the images, and computer means for determining the shape of the stone from information derived from sensing the images. The word "image" includes a shadow.

GB—A—1 416 568 discloses a method and a system as set forth above. The primary purpose of the specification is to store information regarding cut stones so that the stones can later be identified. A beam of light is projected at the stone and it is believed focused on a facet of the stone, and the reflected, or reflected and refracted, images are sensed using a bezel sensor assembly and a pavilion sensor assembly with a large number of windows so as to be responsive to the various directions in which the beam may leave the stone. There is no suggestion of examining unfinished stones and no indication of how this could be done.

An article by Kikuchi and Tzuji in "Systems, Computers, Controls", Volume 8, No. 3, May-June 1977, pages 18—20 describes examining simple polyhedra by rotating the polyhedron and examining it with a TV camera. The system is not suitable for examining unfinished gem stones because of the complexity and range of shapes of such stones and the necessity of determining the shape of the unfinished stone with sufficient precision to make an accurate assessment of the largest cut stone(s) that can be obtained.

EP—A—0 007 809 describes apparatus which is primarily to enable jewellers exactly to match gem stones with which they are working. There are provisions for matching the shape, but they are very simple and rely upon the selection of the most similar shape from a magazine of shapes carried on wheels. The apparatus would not be suitable for determining the largest cut stone(s) which can be fitted within an unfinished stone.

It is well known that unfinished gem stones (normally rough stones or sawn halves) are examined in order to determine the largest cut stone(s) of given proportions which can be fitted within the unfinished stone. Normally, this examination is carried out manually, and the examination requires a high degree of skill. It is desirable to automate this examination.

### The Invention

The invention provides a method as set forth in Claim 1 and a system as set forth in Claim 3. The Claims 2 and 4 set forth preferred features of the invention.

One can determine the largest possible cut (i.e. polished) stone of given proportions which can be fitted inside an unfinished stone such as a rough stone or sawn half (this can be associated with centering for subsequent bruting or coning, and more details are given in GB—A—2 080 712) — this can also take account of grain and of unwanted areas such as pique' (an inclusion within a stone). Bruting is the procedure of cutting or grinding a girdle on a rough stone, after the stone has been sawn (the sawn stone is called a "sawn half"). Coning is forming a cone on the culet or table side of the stone. The following parameters can in addition be determined, but this list is not exhaustive:

suitable proportions or angles for the polished stone;

suitable "swindling", specially if re-entrants or other defects are present — "swindling", is a term covering e.g. having the culet off centre, having girdle out of round or tilting the girdle.

Although the system can be used for centering, it will be noted that no centering is required for the examination in general, and it is merely necessary that the stone should be fully within view, i.e. in a defined window. The outline of the stone is examined.

Particularly but not exclusively in the case of a fancy stone, i.e. a stone of irregular shape, the invention can also be used to determine the size and shape of the recess in the setting for receiving the stone, employed for instance when driving a numerically-controlled cutter to cut the correct blank or when shaping a mould for casting a suitable mount for the stone.

In the case of bruting, the invention can in addition to be used to re-measure the bruted stone e.g. to brute further or to determine the correct angle for polishing.

The proper measurement of the unfinished stone in many cases depends upon there being no re-entrant in the stone, and this can be determined manually or the presence of a re-entrant can be automatically signalled in certain cases though in others (such as the presence of kinks in the crown), the system may be unable to detect re-entrants fully automatically. However, once a re-entrant, e.g. a hole, has been detected by say visual examination, the bottom can be sensed say with a stylus or focussing arrangement, and the information so derived can be superimposed on other data furnished by the system. Alternatively more information can be derived if the method is carried out at least twice, one series of images being provided at one angle to the axis and another series of images being provided at a different angle to the axis (two different fixed image providing means or viewers can be used or a single lens system with two sets of sensors such as charge couple devices, though it is preferred to tilt one viewer for the second examination) or by subsequently rotating the stone about a different axis, say at 90° to the first axis, though expensive processing may be required to correlate the data.

With two viewers, a type of stereoscopic examination can be made, the images being suitably combined; also, the top of the stone could be examined. As a further possibility, the re-entrant can be avoided by removing material around it, prior to examining the stone.

The stone is preferably relatively rotated, and should be rotated through at least 180°. The rotation may be discontinuous rotation, i.e. indexing or incremental rotation, or continuous (e.g. with strobed illumination). Though it is preferred to keep the viewer stationary and rotate the stone, it would be possible to keep the stone stationary and rotate the viewer around the stone — thus the rotation of the stone is referred to as "relative".

However, it would be possible to have multiple viewers, viewing a stone supported on a support or each receiving an image of a falling stone when it reaches a predetermined plane, the viewers being fixed and spaced through e.g. 180°. As a further possibility, the stone could rotate through $\theta/n°$, there being $n$ equispaced fixed viewers in the arc of $\theta$, $\theta$ being 180° or more and preferably 180°.

The edge of the image is preferably sensed at seventeen different positions in 180° (for cut diamonds which have eight-fold rotational symmetry with a mirror plane, seventeen positions is the most efficient number). However, as the number of positions has a broad range, a larger number of positions, e.g. 25 to 200, can be used.

Description of Preferred Embodiments

The invention will be further described, by way of example, with reference to the accompanying drawings, in which:

Figure 1 is a schematic representation of a system in accordance with the invention; and

Figure 2 shows how a rough stone can be examined.

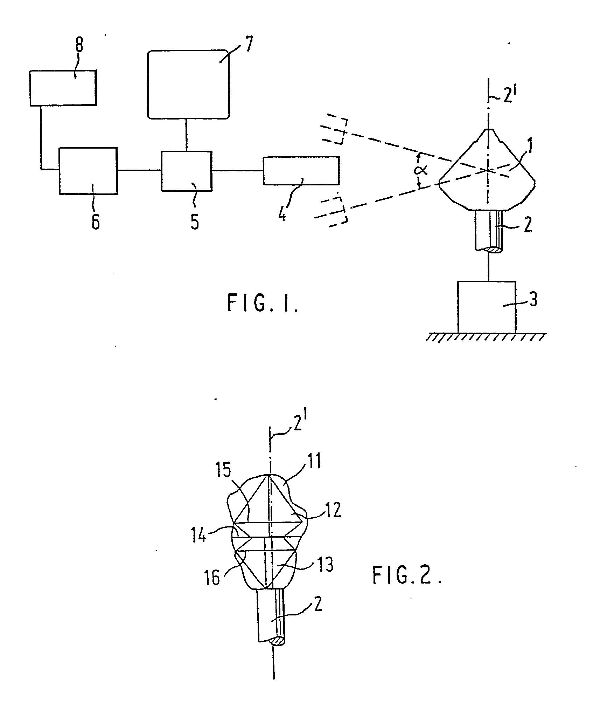

In Figure 1, a diamond 1 is shown in profile, supported by the end of a rotary spindle 2 which is driven by e.g. a stepping motor 3. The speed can be up to 1000 steps per second say 400 steps per second, the rotational movement occupying only a small fraction of the total time. The examination need only take 5 seconds. If desired, the spindle 2 can be hollow and the arrangement can be such that the diamond 1 is held on the end of the spindle 2 by light suction.

The diamond 1 is viewed by a TV viewer 4 connected to an electronic unit 5 associated with a computer 6 (direct memory access transfer) and a screen 7. As shown in dashed lines, the viewer 4 can be tilted through an angle α, though the preferred viewing position is the horizontal position shown, at 90° to the axis 2′ of the spindle 2. Though the axis of viewing is shown intersecting the middle of the diamond 1, it is not very critical and could for instance intersect the girdle or the table (i.e. the top of the spindle 2).

Controls can be provided for defining the area on the screen 7 which is occupied by the image of the diamond 1, the image of the diamond 1 being as with bright illumination in radial view, i.e. generally at right angles to the axis of rotation of the spindle 2. The image of the diamond 1 on the screen 7 can be enhanced optically or electronically to give a well defined edge. For instance, the image can be video-spliced and the edges only detected or sensed. The best discrimination is obtained with the stone 1 dark against a light field (a silhouette), looking at the rise time of the edge of the image and triggering at the correct point, e.g. at the point where the intensity is 75% of that of the field. It will be appreciated that although an image appears on the screen 7, the image whose edges are sensed will be that in the viewer 4. The viewer 4 may be for instance a two-dimensioned charge couple device, producing a purely electronic signal.

The system senses the edge of the image at a number of different angular positions of the diamond 1, as discussed above. The edge of the image is sensed at the minimum number of positions required for the measurement required — for instance, the corners of the profile at the culet, at the girdle and at the table can be detected. The required parameters can be provided at the output of the computer 6. If for instance a blank is being cut or a mould formed preparatory to setting a fancy stone, the computer 6 can be linked directly to the machine tool 8 or can produce a magnetic or punched card for controlling the machine tool 8.

In Figure 2, a rough diamond 11 is shown on the spindle 2, a case being chosen where the axes of the stones 12, 13 are not parallel to that of the spindle 2. Two stones 12, 13 are shown fitted into the rough stone 11, and the system can determine the angle of the cutting plane 14 (one can laser cut along any plane and abrasive saw along any planes up to say 5° from the optimum cutting plane), the heights of the cutting plane 14 and of the two tables 15, 16 from a reference point such as the top of the spindle 2, and the culet angles. For a rough stone, the most important parameter is the minimum diameter at various heights above the top of the spindle 2. However it will be noted that the two stones 12, 13 have slightly different culet angles.

The computer 6 can be programmed in any convenient manner. However one suitable algorithm is as follows:

a) Read in a picture of just the spindle 2 and detect the start of the spindle 2;

b) Place stone 1 table down on spindle 2 and read in a picture of the stone 1 on the spindle 2 (312 TV lines in total);

c) Detect culet from first line from top of picture that contains data;

d) Work down right hand side of the image. As the girdle is perpendicular to the table, detect top and bottom of the girdle at the points where the data changes from being a sloping line (at about 34°—45° to the table plane) to a line making about 85°—95° to the table plane, and then back to a sloping line;

e) The table coordinate is calculated from the first line above the spindle 2;

f) The left hand side is calculated similarly to (d);

g) This provides a set of coordinates for the culet, the girdle top and bottom edge, left hand side and right hand side, and the table extreme left hand side and right hand side. From this it is possible to calculate the proportions of the diamond by simple geometry;

h) By taking several views, the asymmetry of the diamond can be calculated, in particular the out-of-roundness of the girdle. The girdle is not facetted and ideally should be cylindrical, usually left not polished. It is however assumed that the stone is reasonably good.

**Claims**

1. A method of automatically determining the shape of a gem stone (1, 11), wherein images of the stone are sensed at a number of different relative angular positions of the stone about an axis (2') passing through the stone, characterised in that the edges of the images of an unfinished gem stone (1, 11) are sensed in directions generally normal to said axis (2'), and one determines the largest cut stone(s) (12, 13) of given proportions which can be fitted within the unfinished stone (1, 11) making using of information derived from sensing the edges of the images.

2. The method of Claim 1, wherein the stone (1, 11) is rotated relative to the image providing means (4) without centering the stone.

3. A system for automatically determining the shape of a gem stone (1, 11), comprising means (4) for providing respective images of the stone at a number of different relative angular positions of the stone (1, 11) about an axis (2') passing through the stone, means (5) for sensing the images, and computer means (6) for determining the shape of the stone from information derived from sensing the images, characterised in that the image providing means (4) and sensing means are adapted to provide signals representative of images of an unfinished gem stone (1, 11) in directions generally normal to said axis (2') and to sense the edges of the images, and the computer means 6 is adapted to determine the largest cut stone(s) (12, 13) of given proportions which can be fitted within the unfinished stone (1, 11), from information derived from sensing the edges of the images.

4. The system of Claim 3, and further comprising means (8) for forming a setting for the stone, the computer means (6) causing the forming means (8) automatically to form a setting in accordance with the shape of the stone (1, 11).

**Patentansprüche**

1. Verfahren zur selbsttätigen Bestimmung der Form eines Edelsteines (1, 11), wobei Abbildungen des Steines in einer Anzahl von unterschiedlichen relativen Winkelstellungen des Steines zu einer ihn durchsetzenden Achse (2') abgefühlt werden, dadurch gekennzeichnet, daß die Ränder der Abbildungen eines rohen Edelsteines (1, 11) in Richtungen abgefühlt werden, die in der Regel senkrecht zu dieser Achse (2') stehen und daß man der oder die größten geschnittenen Steine (12, 13) vorbestimmter Abmessungen, die in den Rohstein (1, 11) hereinpassen, dadurch bestimmt, daß die vom Abfühlen der Ränder der Abbildungen gewonnene Information ausgewertet wird.

2. Verfahren nach Anspruch 1, wobei der Stein (1, 11) relativ zu dem die Abbildung schaffenden Mittel (4) ohne Zentrieren des Steines, rotiert wird.

3. Ein System zur selbsttätigen Bestimmung der Form eines Edelsteines (1, 11), enthaltend ein Mittel (4), um jeweilige Abbildungen des Steines an einer Anzahl von relativ unterschiedlichen Winkelstellungen des Steines (1, 11) zu einer Achse (2'), die den Stein durchsetzt, zu schaffen, ein Mittel (5), um die Abbildungen abzufühlen und einer Rechner (6), um die Form des Steines aus der durch Abfühlen der Abbildungen gewonnenen Information zu bestimmten, dadurch gekennzeichnet, daß das Mittel (4) zur Schaffung der Abbildung und das abfühlende Mittel geeignet ausgebildet sind, um auf die Abbildungen bezogene Signale eines rohen Edelsteines (1, 11) in Richtungen zu gewinnen, die in der Regel senkrecht zu dieser Achse (2') stehen und die Ränder der Abbildungen abzufühlen und daß der Rechner (6) dafür angepaßt ist, den bzw. die größten geschnittenen Steine (12, 13) vorgegebener Abmessungen, die in einen rohen Stein (1, 11) hineinpassen, aus der vom Abfühlen der Ränder der Abbildungen gewonnenen Information, zu bestimmen.

4. System nach Anspruch 3 und weiter mit einem Mittel (8), um für den Stein eine Fassung zu bilden, wobei durch den Rechner (6) das Mittel (8) zur Formbildung selbsttätig in Übereinstimmung mit der Form des Steines (1, 11) die Fassung ausformt.

**Revendications**

1. Un procédé de détermination automatique de la forme d'une pierre précieuse (1, 11), dans lequel des images de la pierre sont prises sous un certain nombre de positions angulaires relatives différentes de la pierre autour d'un axe (2'), passant au travers de la pierre, caractérisé en ce que les bords des images d'une pierre précieuse non finie (1, 11) sont détectés dans des directions généralement normales audit axe (2') et on détermine la ou les plus grandes pierres taillées (12, 13) de proportions données qui peuvent être mises en place à l'intérieur de la pierre non finie (1, 11) en utilisant une information dérivée de la détection des bords des images.

2. Le procédé de la revendication 1, dans lequel la pierre (1, 11) est tournée par rapport au moyen générateur d'image (4) sans centrage de la pierre.

3. Un système pour déterminer automatiquement la forme d'une pierre précieuse (1, 11), comprenant un moyen (4) pour produire des images respectives de la pierre en un certain nombre de positions angulaires relatives différentes de la pierre (1, 11) autour d'un axe passant au travers de la pierre, un moyen (5) pour détecter les images et un calculateur (6) pour déterminer la forme de la pierre à partir d'une information dérivée de la détection des images, caractérisé en ce que le moyen générateur d'image (4) et le moyen de détection sont adaptés pour produire des signaux représentatifs des images d'une pierre précieuse non finie (1, 11) dans des directions généralement normales audit axe (2') et pour détecter les bords des images, et le calculateur (6) est adapté pour déterminer la ou les plus grandes pierres taillées (12, 13) de proportions données qui peuvent être mises en place à l'intérieur de la pierre non finie (1, 11), à partir d'une information dérivée de la détection des bords des images.

4. Système selon la revendication 3, comprenant en outre un moyen (8) pour établir un positionnement pour la pierre, le calculateur (6) faisant en sorte que le moyen générateur (8) établisse automatiquement un positionnement en accord avec la forme de la pierre (1, 11).

FIG.1.

FIG.2.